# EUROPEAN PATENT APPLICATION

(11) **EP 2 535 395 A1**
(43) Date of publication of application: **19.12.2012**
(21) Application number: 10845485.1
(22) Date of filing: 11.02.2010
(51) Int. Cl.: C10G 11/18, B01J 38/12

(54) **METHOD AND EQUIPMENT FOR CIRCULATING COOLED REGENERATED CATALYST**

(71) Applicant: Li, Li, Luoyang, Henan 471003 (CN)
(72) Inventor: LI, Qunzhu, Henan 471003 (CN); LI, Li, Luoyang city Henan 471003 (CN)
(74) Representative: Price, Nigel John King
(86) International application number: PCT/CN2010/070661
(87) International publication number: WO 2011/097811

(57) **Abstract**

A method for circulating a cooled regenerated catalyst comprises the following steps: a regenerated catalyst derived from a regenerator(5) is cooled to 200-720°C by a catalyst cooler (8A), which either directly enters into a riser reactor (2) without mixing with hot regenerated catalyst, or enters the same after mixing with another portion of uncooled hot regenerated catalyst and thereby obtaining a hybrid regenerated catalyst with its temperature lower than that of the regenerator; a contact reaction between a hydrocarbon raw materials and the catalyst is performed in the riser reactor (2); the reaction product is introduced into a settling vessel (1) to separated the catalyst and oil gas; the separated catalyst ready for regeneration is stream-stripped in a stream stripping phase (1A) and enters the regenerator (5) for regeneration through charring; after cooling, the regenerated catalyst returns to the riser reactor (2) for recycling.

## Description

### Technical fields

This invention belongs to the technical field of fluid catalytic cracking(FCC), Particularly involving the use of the method and equipment for circulating cooled regenerated catalyst for tar catalytic cracking and low-grade gasoline catalytic cracking.

### BACKGROUD OF THE INVENTION

With the poor quality of the crude oil quality and heavy trend growing, and the blending ratio of residual oil in the FCC continuously increasing, the gasoline quality with FCC, coking, thermal cracking etc. processes becomes worse. The olefin in gasoline is an effectively high-octane component, on the other hand the olefin through the combustion process produces a lot of pollutants to pollute the environment. Although the use of traditional hydrotreating process can reduce olefins in gasoline, the octane number will be lost significantly. To solve above problems and improve the gasoline quality, many refineries in the world have also done a lot of research work.

Luoyang Petrochemical Engineering Corporation has developed a more flexible and efficient catalytic cracking process (CN92105596 X). The process utilizes dual riser reactor, one riser as gasoline modification reaction zone, and the other as the FCC main riser reaction zone. The process uses highly active catalyst to improve gasoline quality. The process takes into account the reaction conditions of main riser for tar FCC, thus the reaction conditions for improving gasoline quality is limited. With the gasoline riser, gasoline olefin can reduce 10 to 30 volume percent.

China University of Petroleum (East China) use two-series riser technology (CN302843A). The oil and gas in the reactor are series, and the catalyst relays the operation to achieve more light oil yield to reduce olefins contents in gasoline. But the technology uses two-series risers to make the process very complex. The flexibility of the equipment operation is limited. Because the process is the two risers to connect operation the oil and gas, it will affect each other between the reaction of improving gasoline quality and the reaction of other components. Therefore, the final product selectivity in the reaction will be affected. The decline in gasoline olefin content may be reduced to about 15 volume percent.

Due to heavy raw materials and the high value of the residual carbon, the coke yield of heavy oil catalytic cracking has been increased. At the same time the produced heat is more than the required heat of the reaction system resulting in excess heat. Therefore a removing heat unit must be installed in the heavy oil catalytic cracking unit in order to remove excess heat from the system and be able to maintain the heart balance the heat of reactors and regenerators. Currently there are many kinds of catalyst coolers in heavy oil catalytic cracking for removing heat.

US5451313 discloses a FCC process, in which the catalyst after reaction and regenerated catalyst recycle together to reduce the reaction severity, improve feed atomization and promote contact with the catalyst. But it does not mention that the catalyst cooler can be used for cooling both of the regenerator bed and regeneratant of riser feeding.

UOP Corp develops a "X design" technology( the magazine «World Petroleum Science» , 1996, 3(9)). The process is to mix some catalysts partly to be born (to be regenerated catalyst) without burning carbon regeneration and with regenerated catalyst in the mixing tank then directly return to riser reactor. Due to regenerated catalyst cooling, the catalyst and feed ratio can be increased. The disadvantage of the technology is to mixing regenerated catalyst and used catalyst without burning carbon regenerated directly so as to decrease the activity of catalyst from riser reactor and not conducive to cracking reactions.

The current heat removing technology, also known as catalyst cooling technology, only can take heat from the cold regenerated catalyst returned to regenerator dense phase and can not optimize the operating conditions of the reaction system. Thus there are many shortcomings in the current reaction and regeneration system technologies.

As above, On the basis of the existing technology, the purpose of the present invention is to provide a kind of circulation process of cold regenerated catalyst which are mainly used to tar FCC with heavy feedstock and gasoline quality upgrading , and solve the problems about high blending ratio of residual oil with FCC and gasoline upgrading quality.

Another purpose of the invention is to ensure the conditions of an enough regenerated temperature and a good effect for regeneration. The cold regenerated catalyst circulation process can (1)drop the temperature of regenerated catalyst into a reactor, (2)increase crude oil preheating temperature, (3)improve the crude oil atomization effect, (4)increase the blending ratio of the catalyst and crude oil, (5)improve the tar FCC product distribution, and (6) increase liquid products yield.

The third purpose of the invention is to ensure the conditions of an enough regenerated temperature and a good effect for regeneration. The cold regenerated catalyst circulation process can drop the temperature of cooled regenerated catalyst into a reactor. In the proper ratio of the catalyst and feed, the process can reduce the riser reaction temperature and increase the catalyst activity in the riser so as to promote hydrogen transfer, isomerization, and aromatization reaction and reduce coke and gas yield. The gasoline and light distillation products yields will be increased; the octane number of gasoline will be increased too. Olefin and impurities in gasoline will be reduced.

### SUMMARY OF THE INVENTION

The present invention is to provide a cycling method of cold regenerated catalyst or contact catalyst(hereinafter referred to as the catalyst), to utilize the normal technology of catalyst cooling in FCC, in keeping regeneration temperature unchanged, relying on reducing the regenerated catalyst temperature, to make the ratio of catalyst and feed as the independent adjustable variables.

The present invention is to provide a cycling method and its equipment of cold regenerated catalyst. Specific technical solutions are detailed below:
A cycling method and its equipment of cold regenerated catalyst, characterized in that, including a FCC process: hydrocarbon materials react with catalyst in the riser reactor(with or without a fluidized bed reactor); the materials enter into a settler for the separation of catalyst from gas and oil; Separated catalyst will be stripped and enter into regenerator to burn for regeneration; The regenerated catalyst will be cold or/and not be cold to return the riser reactor directly for cycling use; The details are as follows:
   (1) the regenerator includes one, two, or more catalyst coolers, each connected to the riser reactor (or the fluidized bed reactor) is used to adjust the reaction temperature of the reaction zone, or/and to adjust regenerator temperatures, so as to keep them in the best value; the catalyst coolers connected with the riser reactor (or the fluidized set in the inside or outside of regenerator, or set under its riser reactor ;
   (2) The catalyst entrance of the shell of the described catalyst cooler directly (or through a pipeline) connects with the regenerator dense phase; there are internal components in the cooler for removing heat; there are fluidized media distribution facilities under the cooler; In the downstream, there is a buffer space for mixed buffer catalyst; the upper part is installed or not installed the gas channel to return to diluting phase of the regenerator;
   (3) There are one, two or more catalyst exits set in the catalyst mixed buffer space in the downstream of the described catalyst cooler; One, two or more exits of catalysts are connected to the transmission channel of cold catalyst used to deliver cold-regenerated catalyst circulation to one, two or more of the riser (reactor or auxiliary riser); Another one, two or more (or not) catalyst exists are connected to the transmission channel of cold catalyst for conveying cold regenerated catalyst return to the regenerator; The described transmission channel of cold catalyst to the riser is set in the outside of the described catalyst cooler's shell, or all (or partly) set in the inside of the described catalyst cooler's shell; The return channel of the cooled catalyst back to the regenerator all set in the outside of the described catalyst cooler's shell, or all (or partly) set in the inside of the described catalyst cooler's shell.
   (4) The described riser reactor is set one, two or more reaction zones with or without fluidized bed reactor; Before cold regenerated catalyst enters into the riser reactor or fluidized bed reactor, the riser reactor is set (or not set) a pre-lift section, with pre-lift media to send the cold regenerated catalyst to the riser reactor or the fluidized bed reactor; The described pre-lift section can all be set outside of the catalyst cooler shell, or all(or part) set inside.
   (5) Part of regenerated catalysts coming from regenerator are cooled by catalyst cooler within 200 to 720°C and enter into the pre-lift or directly into each reaction zone of riser reactor; Or these regenerated catalysts mix or/and with hot regenerated catalyst without cooling to get the regenerated catalyst mixture which temperature is lower than regenerator temperature and then the mixture enter into pre-lift or/and each reaction zone of the riser reactor; Or the cold and the hot regenerated catalysts enter into the pre-lift of riser separately and directly with pre-lift media for increasing the catalysts temperature to reach a proper temperature and then the mixture enter into each reaction zone of riser reactor; Or the regenerated catalyst without cooling by catalyst cooler enter into the pre-lift zone or/and each reaction zone of the riser reactor directly for cycling.

Setting (or not setting) one, two or more assistant risers, the described cold regenerated catalyst through the assistant risers with the pre-lift media are lifted to one, two or more riser reactors or fluidized bed reactor reaction zones as a cold shock agent for cycling. The regenerated catalysts coming from regenerator as step (5) described are cooled by the catalyst cooler within 360 to 650 °C.

The temperature of the described cold regenerated catalyst can be controlled by adjusting the flows of the fluidized media and/or taking-heat media or adjusting other parameters; or controlled by adjusting the flows of the fluidized media and/or taking-heat media and/or adjusting the flows of cool catalyst returning regenerator or other parameters.

The temperature of the described regenerated catalysts mixture can be controlled by adjusting the ratio of cold and hot regenerated catalyst.

The reaction temperature of the described riser reactor or fluidized bed reactor reaction zones can be controlled by adjusting the ratio of the catalyst and feed, or/and by adjusting the temperature of the described cold regenerated catalyst or the temperature of the described regenerated catalyst mixture, or/and by using multi-point feeding technology, and /or by adding various cold shock agents to the riser reactor.

The described taking-heat medias in the catalyst cooler include water, steam, air and various oils.

The described cycling method and its equipment of the cold regenerated catalyst can be used widely for various FCC including tar catalytic cracking, wax oil catalytic cracking, gasoline catalytic modification for improving quality, or light hydrocarbon catalytic conversion, or for other burning process of gas-solid fluidized reaction including residue pre-processing, ethylene made by methanol, fluidize coking or flexible coking.

The cycling method and its equipment of cold regenerated catalyst can be implemented independently for each reaction zone of a riser reactor (or fluidized bed reactor) of all kinds of FCC; or jointed to implement for each reaction zone of one, two or more riser reactors (or fluidized bed reactor) including tar risers and gasoline risers of the dual risers FCC units or different feeds riser reactors.

The described catalyst in the catalyst cooler is the regenerated catalyst with any carbon content or the regenerated catalyst without completed regeneration or the contact agents with any carbon content or coking particles.

The catalyst coolers are traditional industrial equipment. The methods and units of the present invention can be a variety of structures (such as the upward mode, downward mode, etc.), the catalyst transmission channels can be also the various connecting structures (such as inner-loop pipe, Y-shaped, U-shaped outer transmission (cycling) pipe, etc.). The person skilled in the art can be easy to understand the structures, connection styles, operation and control process, which will not be restricted by any specific implement.

The temperature of the described regenerated catalyst mixture into the reaction zones of the riser reactors (or fluidized bed reactors) can be controlled independently by adjusting the above mentioned ratio of cold and hot regenerated catalysts. When the cold regenerated catalyst through the catalyst cooler enters into the riser reactors directly (or fluidized bed reactor), the temperature of the cold regenerated catalyst in the reaction zones of riser reactors (or fluidized bed reactors) can be controlled by adjusting the flows of fluidized media and /or taking-heat media and /or the flows of cold catalysts retuned to the regenerator or adjusting other parameters. Therefore, the ratio of catalyst and oil (the ratio of regenerated catalyst and raw materials) in the riser reactors (fluidized bed reactors) and the reaction temperatures can be controlled independently.

According to process requirements, the catalyst coolers which adjust the regenerator temperature can not be set, and/or one; two or more catalyst coolers which adjust the reaction zone temperatures of riser reactors (or fluidized bed reactors) can not be set too. The hot regenerated catalysts enter into the risers directly.

The catalyst coolers for adjusting regenerator temperature can be not set, or only set one, two or more which connect with the riser reactors (or fluidized bed reactors). The temperature of regenerator can mainly be controlled by adjusting heat balance of regeneration system for reaction, and/or mainly can be controlled by adjusting the flows of fluidized media and /or taking-heat media and /or the catalysts retuned to the regenerator or adjusting other parameters.

When the catalyst coolers for adjusting the temperature of reaction zones for riser reactors (or fluidized bed reactors) can be set or not set, the regenerator temperature can be controlled by adjusting the heat balance of reaction regeneration system, and /or by adjusting the flows of fluidized media and /or taking-heat media and /or the catalysts retuned to the regenerator or adjusting other parameters.

The mentioned reaction temperature of reaction zones for riser reactors (or fluidized bed reactors) can be controlled by adjusting the ratio of catalyst and oil (The said cold catalyst return channel can set in control elements such as slide valves, plug valves, etc.), and /or by adjusting the temperatures both cold regenerated catalyst and regenerated catalyst mixtures to keep the temperature at the best value.

Of course, there are also many other control devices and control methods, which the person skilled in the art know clearly. They will not be restricted by any specific implement.

The mentioned fluidized medias and transmission medias can be air, steam, etc, the taking-heat medias can be water, steam, air, oils, etc. The mentioned pre-lift medias can be water, steam, various refinery dry gases, etc.

The mentioned regenerated catalysts entering into catalyst coolers can be the regenerated catalysts with any carbon contents or no completely regenerated catalysts. The mentioned regenerated catalysts entering into catalyst coolers also include the contact agent with any carbon contents or coke particles, etc.

The mentioned catalyst coolers can be connected with regenerators and risers directly, or connected them with pipes.

The cycling method and its equipment of the cold regenerated catalyst in the present invention can be used for various reaction regeneration types of FCC units (such as coaxial, parallel, etc.). The method and equipment can be combined with various regenerators, such as setting the first regenerator, the second regenerator, etc. The person skilled in the art can know clearly about combination types, operation and control process. They will not be restricted by any invention ideas and any specific implement.

In the FCC units with the cycling method and its equipment of cold regenerated catalyst in the present invention, the reaction products are separated and the catalysts are regenerated in conventional method. The separation and regeneration can use various reaction regeneration types used by the riser in the FCC including risers types (including equal diameters or non-equal diameters, with fluidized bed or not with fluidized bed reactors, etc.), various regeneration types and various combinations types. The catalyst after reaction in regenerators in normal FCC conditions will be burned for regenerating. The regeneration temperatures are controlled at 630-800°C (preferably 680-730°C).

The riser catalytic cracking process and its equipment is mature industrial process. The person skilled in the art know clearly about the combination types, operation and control process, which will not be restricted by any specific implement. The present invention will not restrict any catalysts and process conditions about them.

The cycling method and its equipment of cold regenerated catalyst in the present invention can be used widely for the various fluidized catalytic cracking process including tar FCC, wax FCC, light hydrocarbons (liquefied petroleum gas, carbon four, EPA, gasoline, etc.) FCC etc, and can also be used for the burning process of other gas-solid fluidized bed reaction including pretreatment of residue oil, ethylene produced by methanol, fluidized coking, flexible coking, etc. The mentioned cycling method and its equipment of cold regenerated catalyst can be implemented independently for a riser reactor (or fluidized bed reactor) reaction zones in various fluidized catalytic cracking. According to the requirement, it can be equipped with one or more assistant risers for sending catalyst to a riser reactor (or a fluidized bed reactor) as a quenched agent. Or it can be implemented jointly, equipped with one or more assistant risers for sending catalyst to one or more riser reactors (or fluidized bed reactors) reaction zones as quenched agents. One or more riser reactors reaction zones include the tar risers and gasoline risers in the dual riser catalytic cracking units, to process a variety of raw materials in one or more riser reaction zones. According to the requirement, it can be equipped with one or more assistant risers for sending catalyst to a riser reactor (or a fluidized bed reactor) as a quenched agent

The cycling method and its equipment of cold regenerated catalyst in the present invention can be use for tar FCC. The tar hydrocarbons are mixed with cold regenerated catalyst from tar riser pre-lift zone (or not set) into the tar riser reactors (with or without fluidized bed reactors). The main operating conditions are as follows:
Reaction temperature 400-650°C (preferably 520-600°C),
Reaction pressure 0.11-0.4MPa,
Contact time 0. 05 -5 seconds (preferably 0.1-3seconds),
Weight ratio of catalysts and feeds, 3-15 (preferably 5-12).

To compare with existing technologies, the tar riser reactor operation conditions in this FCC invention are independent relatively, and the reaction temperature, catalyst/oil ratio and feeding-preheat temperature etc can be adjusted flexible based on the quality heavy oil and reaction requirement. Therefore, the process can increase the residue ratio, produce poor quality tar, increase yield of light oil. The process can reduce gasoline olefin content significantly, and increase the octane value of gasoline, reduce other impurity contents in products. The advantages of the process are operation easily, simple and flexible, wide-ranging application.

To compare with the existing technology, the advantages of the present invention are as follows:
1) better atomization for raw materials.
   In the conditions of keeping regeneration temperature unchanged, to reduce the temperature of regenerated catalyst, the ratio of catalyst and oil becomes an independent and adjustable variable number. In the normal mixed temperature of the riser, it can increase the catalyst/oil ratio and the preheat temperature of feed, improve feed atomization for promoting the feed to contact the catalyst so as to reduce the yields of coke and dry gas.
2) tar riser reactor can flexibly adjust the temperature of reaction zones and the temperature of regenerator so that the temperatures will be kept at the best value. Therefore, the tar riser reaction zones can use more appropriate reaction time and reaction temperature.
3) higher regeneration temperature
   The regeneration temperature is not limited by the catalyst /oil ratio and feed preheat temperature. The regeneration temperature can be increased because this is good for regenerating efficiency, and has a function for passive heavy metal. Higher regeneration temperature can make flue gas take the heat out more, so the heat taken from regenerators will be reduced.
4) higher catalyst activity
   Due to reduce the temperature of regenerated catalyst, the water-and-heat inactivation of the regenerated catalyst in the riser pre-heat section will be reduced. 5) to process the heavier hydrocarbon raw materials.
   The blending ratio of vacuum residue can reach at 100%, that is to process 100% vacuum residue, to reduce unwanted products yields such as coke and gas, meanwhile to increase gasoline and light distillation points yields, to increase the octane number of gasoline, to reduce olefin in products and impurity contents. Thus the technology economy is improved.
6) to increase the processing capacity
   In the unchanged conditions of the raw materials and product solutions, due to coke and dry gas yield reducing, the processing capacity will be increased at 15-20%.
7) to combine with other technologies, the effect of technology in the present invention will be better.
   The use of the technology does not affect to use other technologies, such as to combine with the technology for existing dense segments to take heat out, the technology of riser reaction terminator injection, technologies of multi-reaction zones and multi-points feeding etc. The effect will be better. Of course, the technology of the present invention can be used with other processes too. It will not be affected by any specific implementation.

To compare with the individual use of the technology of mixing temperature control or the individual use of the technology of terminator injection, the technology of the present invention can reach at higher temperature for taking heat and make heat utilization more rational.

The technology of the present invention can also be used in gasoline catalytic conversion. The operating conditions of the riser reactor are independent relatively. According to the reaction requirement, the operating conditions such as temperature, the catalyst/oil ratio and feed pre-heat temperature etc. can be adjusted flexibly.

To compare with the existing technologies, the technology of the present invention can reduce the volume contents of gasoline olefin significantly. The technology of the present invention technology possesses the advantages i.e. increasing octane number of gasoline and reducing of the product impurity contents, operating easily, simple and flexible, use widely. To compare with the existing technologies, the low-grade gasoline processed by FCC process of the present invention, the volume contents of gasoline olefin can be reduced to 30-70%, octane numbers (RON) can be increased to 0.5-40units; the sulfur content in gasoline can be reduced in 30-70% (weight).

After pre-heat (or not pre-heat), the gasoline e (gas style or liquid style) enter into a riser and will be mixed with cold regenerated catalyst from the pre-lift section (can not be set) of the gasoline riser, and then enter into the gasoline riser reactor (with or without a fluidized bed reactor). The purposes are the reactions for isomerization; aromatization and other product improving qualities, for reduce olefins, sulfur, and nitrogen content and increase octane number.

The main operating conditions for improving gasoline quality by the gasoline catalytic conversion with the technology y of the present invention are as follows:
Reaction temperature: 350-650°C (preferably 400-600°C)
Absolute pressure: 0.11-0.4MPa,
Contact time: 0.5-30second (preferably 1-15seconds)

The gasoline catalytic conversion process of the present invention can be implemented jointly with the tar catalytic cracking process can also be implemented alone. The operating conditions of gasoline riser reactors can be adjusted independently and flexibly. According to the market situation, the reaction temperature and other conditions for improving quality can be adjusted flexibly:
1) to use the lower temperature for producing low-sulfur, low olefin gasoline.
   When the purposes are for reducing olefin in gasoline and sulfur contents so as to get clean gasoline, the reaction temperature can be very low (350-520°C, preferably 400-480°C), the isomerization, hydrogen transfer, aromatization, alkylation can dominate absolutely in ideal secondary reaction under enough time. The light product yield is more than 98.5%.
2) To use the higher reaction temperature can produce more quantities of LPG, light olefins, meanwhile to produce low sulfur and low olefin gasoline.
   When the purposes are for getting more quantities of LPG, light olefin, reaction temperature can be very high (500-650°C, preferably 520-600°C). It will make olefin cracking reaction as dominant reaction, meanwhile the reaction increase diesel/gasoline ration, reduce gasoline olefin and sulfur contents, and produce high-octane number clean gasoline.

The gasoline distillate can be all fractions, for example, from initial boiling point to around 220°C fractions; It can also be a part of narrow fractions, for example, 70-145°C fractions. The gasoline fractions can be the fractions with one time processing such as straight-run gasoline, natural gasoline, or can be the gasoline fractions with the secondary time processing such as coking gasoline, FCC gasoline, visbreaker gasoline, thermal cracking gasoline, etc. or more than one gasoline fraction mixture. The olefin contents of the gasoline fractions can be 0-80%(weight), and the fractions contain a small amount of sulfur, nitrogen and other impurities, such as sulfur contents can be more than 200ppm, nitrogen contents can be more than 30ppm.

The mentioned all fraction or narrow fraction poor quality gasoline are one or more kinds of gasoline mixtures including distilled gasoline, natural gasoline, FCC gasoline, thermal cracking gasoline, visbreaker gasoline, coking gasoline, ethylene gasoline processed by cracking.

### Drawing description

The drawing is for the description of the present invention, it will not be restricted by any specific implement.

The drawing 1 is a special schematic diagram.

The drawing 2 - 4 is a schematic diagram for tar catalytic cracking units with the present invention.

As following, the present invention is further illustrated by the drawings.

Drawing 1: A special schematic diagram (a cold regenerated catalyst cycle process)

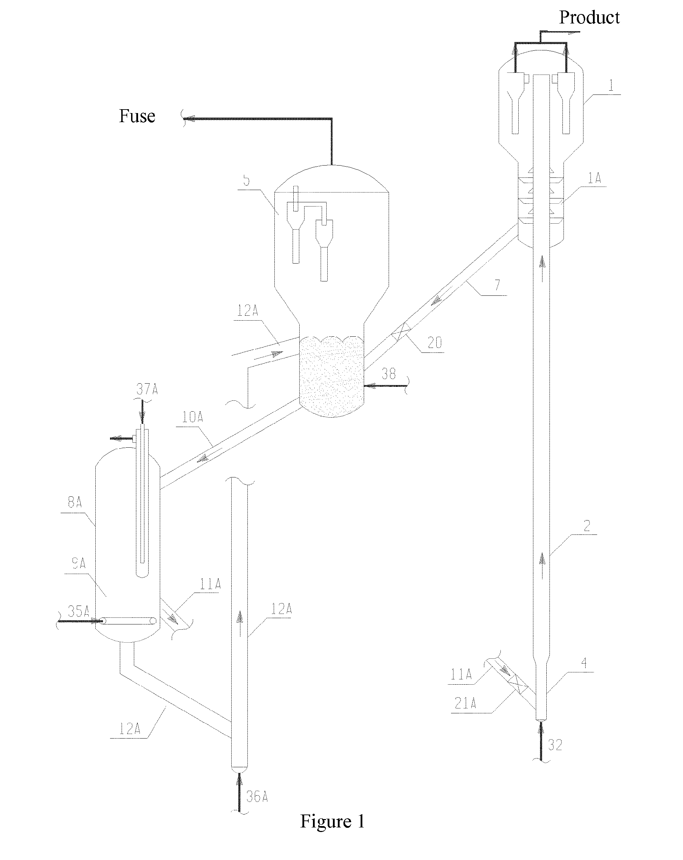

As Figure 1 shown: the cycling instruments of cold regenerated catalyst of the present invention include the disengager 1, the riser 2 with the pre-lift sect 4 and the regenerator 5. For transporting the spent catalyst to he regenerator 5, the pipeline 7 of spent catalyst is set between the regenerator 5 and the stripping section 1A and the control valve 20 can connect the regenerator 5 and stripping section 1A.

The regenerator has two inside or outside taking-heat equipments as the catalyst coolers, including the entrance of the catalyst directly with the dense of the regenerator (or through a pipe), the mixing buffer space in the lower part, internal taking-heat element (including telescopic or tube-wire, etc.), the facilities for distribution of streaming media in the lower part.

Catalyst cooler 8A is mainly used to adjust the reaction temperature of the first reaction zone, to keep it in the best value. Another catalyst cooler (not shown) is primarily used for regulating the temperature of the regenerator to keep it in the best value. 35A is fluidized media, such as air, steam, etc., 36A is lifting media, such as air, steam, etc, 37A is taking-heat medium, including water, steam, air, and all kinds of oil.

The regenerator 5 is connected with the catalyst cooler 8A through regenerator duct 10A and the regenerated catalyst after cooling enters into the mixing buffer space in the lower part. The cold regenerated catalyst is connected with the pre-lift sect 4 of the riser reactor through the cold pipeline 11. Leaving the catalyst cooler 8A (the mixing buffer space in the lower part 9A), the temperature of the cold regenerated catalyst can be controlled by regulating the flow rate of the fluidized media 35A (including air, steam, etc.) and / or the flow rate of the lifting media 36A (including air, steam, etc.) of the return pipe 12A of the cold regenerated catalyst. The control valve 21A is set as one of control components in order to facilitate the control of the flow rate of the cold regenerated catalyst.

For conveniently controlling the temperature of the reaction zone of the riser reactor, the pipeline of the hot regenerated catalyst (including the control valve) (not drawn) can connect the regenerator 5 directly with the pre-lift sect 4 of the heavy oil riser reactor. After lifting the cold regenerated catalyst mixed with hot regenerated catalyst in the pre-lift sect 4 of the riser reactor by the mixed media 32 of pre-lift area (including water, steam, and refinery gas, etc.), the temperature can reach to equilibrium.

Heavy oil riser reactor can also set the two reaction zones. The cold regenerated catalyst can enter the auxiliary riser through the pipeline of the cold regenerated catalyst, and reach the second reaction zone of the riser reactor as the cold-shocking agent by the lifting medium (not drawn).

According to requirements of the process, the catalyst cooler mainly used to adjust the temperature of the regenerator can not be set. The temperature of the regenerator 5 can be controlled by regulating the flow rate of the medium 35A including the flow rates of air, steam, etc. and the lifting media 36A of the return pipe 12A of the cold regenerated catalyst.

Of course, There are also many other control equipments and control methods, which do not limit any specific implementations of the present invention.

The above-mentioned catalyst cooler can also be connected with the regenerator and the riser as a single entity, or connected through the pipelines.

Cooling to 200-720 ° C (preferably 360-650° C), the cold regenerated catalyst can enter into the riser reactor through pre-lift sect 4. Hydrocarbon raw materials in the riser reactor 2 react with the catalyst, and the flow after reaction can enter the disengager 1 for separation of catalysts and oil /gas, the spent catalyst after separation can be stripped by stripping section 1A, then enters into the regenerator 5 in the presence of the oxygen-containing gas 38 (including air) to be burnt for the regeneration the regenerated catalyst after cooling can return directly to the riser reactor for cycling use.

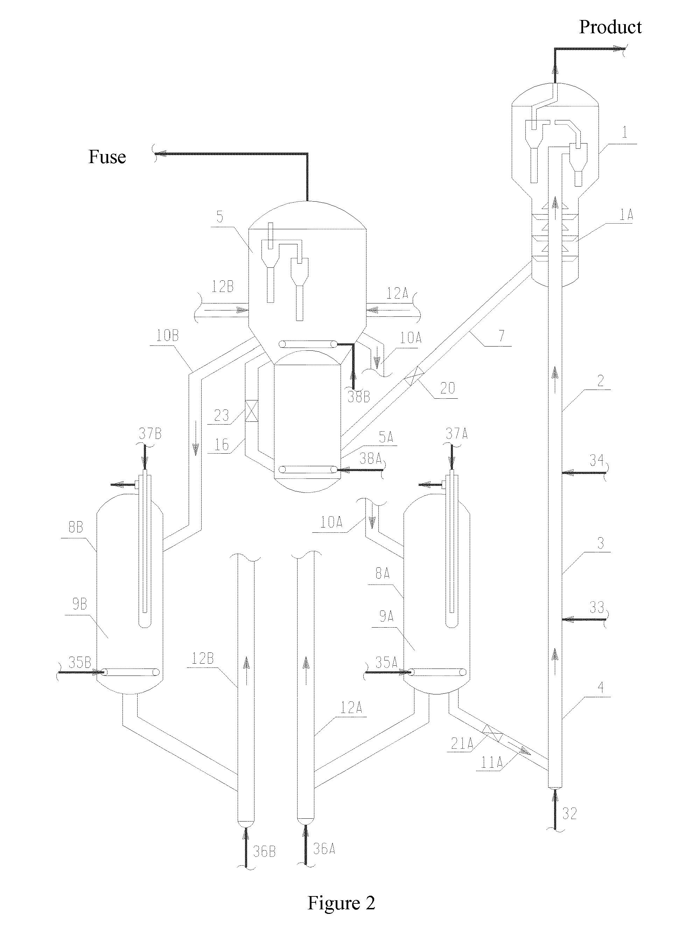

Figure 2 is a typical scheme of the heavy oil catalytic device of the present invention. Such as shown in Figure 2: the method and its equipment of the present invention for the heavy oil catalytic conversion, include the disengager 1, heavy oil riser reactor, which can include the pre-lift sect 4, the first reaction zone 3, the second reaction zone 2, the

regenerator 5, the combustor 5A. The part between the combustor 5A and the stripper 1A of the disengager 1 set the pipeline 7 of the spent catalyst and control valve 20 to connect the combustor 5A and the stripping section 1A for transporting the spent catalyst to the combustor 5A. In order to ensure the start combusting temperature of the combustor 5A, the pipe 16 of the regenerated catalyst and control valve 23 can be set.

The regenerator has two inside or outside taking-heat equipments as the catalyst coolers, including the entrance of the catalyst directly with the dense of the regenerator (or through a pipe), the mixing buffer space in the lower part, internal taking-heat element (including telescopic or tube-wire, etc.), the facilities for distribution of streaming media in the lower part.

35A, 35B are fluided media such as air, water, steam, etc. 36A, 36B are lifting media such as air, steam, etc. 37A, 37B are taking-heat media, including water, steam, air, and all kinds of oil. Catalyst cooler 8A is mainly used to adjust the reaction temperature of the first reaction zone, to keep it in the best value. Catalyst cooler 8B can primarily regulate the temperature of the regenerator for keeping it in the best value.

According to requirements of the process, any one or two of catalyst cooler 8A, 8B can not be set.

The regenerator 5 is connected with the catalyst cooler 8A through regenerator duct 10A and the regenerated catalyst after cooling enters into the mixing buffer space in the lower part. The cold regenerated catalyst is connected with the pre-lift sect 4 of the riser reactor through the cold pipeline 11. Leaving the catalyst cooler 8A, the temperature of the cold regenerated catalyst can be controlled by regulating the flow rate of the fluidized media 35A (including air, steam, etc.) and / or the flow rate of the lifting media 36A (including air, steam, etc.) of the return pipe 12A of the cold regenerated catalyst. The control valve 21A is set as one of control components in order to facilitate the control of the flow rate of the cold regenerated catalyst.

For conveniently controlling the temperature of the first reaction zone of the riser reactor, the pipeline of the hot regenerated catalyst (including the control valve) (not drawn) can connect the regenerator 5 directly with the pre-lift sect 4 of the heavy oil riser reactor. After lifting the cold regenerated catalyst mixed with hot regenerated catalyst in the pre-lift sect 4 of the riser reactor by the mixed media 32 of pre-lift area (including water, steam, and refinery gas, etc.), the temperature can reach to equilibrium.

Of course, There are also many other control equipments and control methods, which do not limit any specific implementations of the present invention.

In order to easily control the temperature of the second reaction zone 2 of the riser reactor, the cold-shocking agent 34 can be injected into the downstream of the first reaction zone to conveniently control the temperature of the second reaction zone. The above-mentioned cold-shocking agent can be any one of gas or liquid (including water, or any kinds of oil, etc.) and cold catalysts, or two or more of them. The cold catalyst is the one of the cold regenerated catalyst, the spent catalyst, or the cold semi-regenerated catalyst, or two or more of them.

As the cold-shocking agent, the cold regenerated catalyst can enter the auxiliary riser through the pipeline of the cold regenerated catalyst, and reach the second reaction zone of the riser reactor as the cold shock agent by the lifting medium (not drawn).

The regenerator 5 is connected with the catalyst cooler 8B through regenerator duct 10B and the regenerated catalyst after cooling enters into the mixing buffer space 9B in the lower part. The temperature of the regenerator 5 can be controlled by regulating the flow rate of the fluidized media 35B (including air, steam, etc.) and / or the flow rate of the lifting media 36B (including air, steam, etc.) of the return pipe 12B of the cold regenerated catalyst.

Of course, There are also many other control equipments and control methods, which do not limit any specific implementations of the present invention.

The above-mentioned catalyst cooler can also be connected with the regenerator and the riser as a single entity, or connected through the pipelines.

Heavy oil as the raw materials 33 and the regenerated catalyst from the pre-lifting zone 4 of the riser reactor with heavy oil are mixed and then enter into the first reaction zone 3 of the riser reactor with heavy oil in FCC. The main operating conditions are as follows: reaction temperature 400-650 °C(preferably 520-600 °C), reaction pressure 0.11∼ 0.4MPa, contact time 0.05∼ 5 seconds (preferably 0.1-3 seconds), the ratio of catalysts and raw materials average of 3 to 15, preferably 5 to 12.

The cold-shocking agent 34, oil and gas from the first reaction zone 3, and the mixture of catalyst are mixed for cooling, and then enter into the second reaction zone 2 of the riser reactor with heavy oil, in which the secondary reactions such as hydrogen transfer, isomerization, aromatization occur for further reducing the olefin and sulfur content, and increasing octane. The main operating conditions are as follows: reaction temperature of 350-620 °C (preferably 450-530 °C), reaction pressure 0.11 ∼ 0.4MPa, 0.5 to 30 seconds of contact time (preferably 1-5 seconds).

The mixture of the oil and gas from the second reaction zone 2 and the catalyst enters the disengager 1 and can be separated. The oil and gas enter the system of fractionation and absorption for fractionation and liquefied petroleum gas (LPG) recovery, to obtain catalytic cracking gasoline products and unconverted oil.

The spent catalyst stripped by the stripper 1A of the disengager 1 enters into the combustor 5A through the pipeline 7 of the spent catalyst and control valve 20. In the presence of the main wind 38A (oxygen-containing gases including air, etc.), the spent catalyst was fast burnt and transports to the regenerator 5 for further burning. The secondary air 38B (oxygen-containing gas, including air) is supplied on the bottom of the regenerator 5. The regenerated catalyst from the regenerator bottom enters the catalyst cooler 8A and catalyst cooler 8B by two routes. One is that the cold regenerated catalyst mixed or not with hot regenerated catalyst for recycling use, the other way is back to the regenerator.

The gas or liquid injection point of the cold-shocking agent is set at the upstream or downstream of the injection point in the cold catalyst to easily control the temperature of the reaction zone, or form another reaction zone.

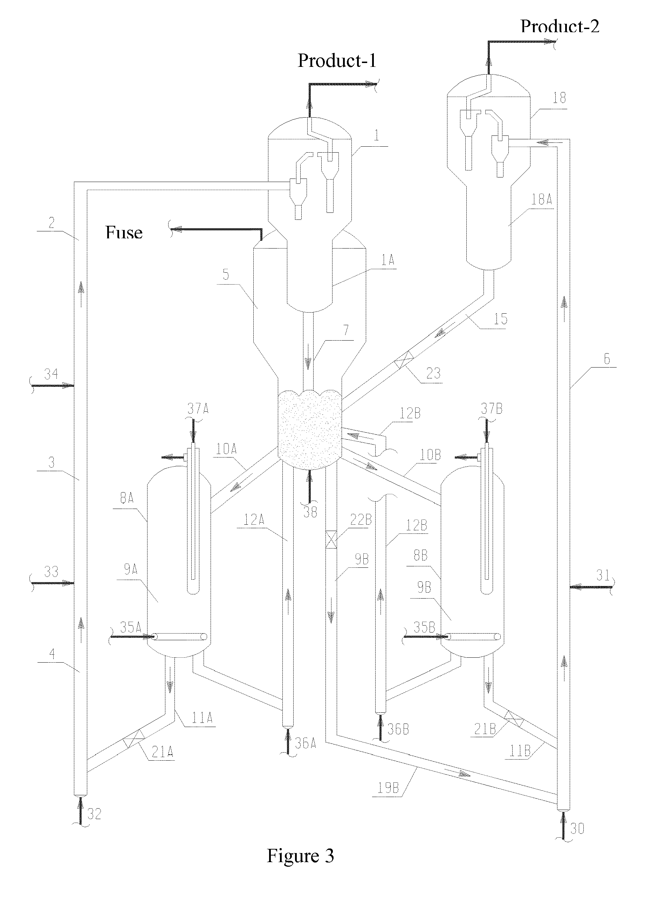

Figure 3 is a typical schematic diagram of the heavy oil catalytic conversion device (gasoline modified joint implementation) for the application of the present invention. Such as shown in Figure 3: the method and its equipment of the present invention for the heavy oil catalytic conversion, include the disengager 1 of heavy oil, the disengager 18 of gasoline, heavy oil riser reactor, which can include the pre-lift sect 4, the first reaction zone 3, the second reaction zone 2, the regenerator 5, the gasoline riser 6. The part between the regenerator 5 and the stripper 1A of the disengager 1 set the pipeline 7 of the spent catalyst and control valve (not drawn) to connect the regenerator 5 and the stripping section 1A of the disengager 1 of heavy oil for transporting the spent catalyst to the regenerator 5.

The pipeline 15 of the spent catalyst and the control valve 23 are set for connection with the regenerator 5 and the stripping section 18A of the disengager 18. The control valve 23 is set in order to easily control the flow rate of the spent catalyst for cold-shocking agents. Of course, There are also many other control equipments and control methods, which do not limit any specific implementations of the present invention.

The regenerator has three inside or outside taking-heat equipments as the catalyst coolers, including the entrance of the catalyst directly with the dense of the regenerator (or through a pipe), the mixing buffer space in the lower part, internal taking-heat element (including telescopic or tube-wire, etc.), the facilities for distribution of streaming media in the lower part.

Catalyst cooler 8A is mainly used to adjust the reaction temperature of the first reaction zone, to keep it in the best value. Catalyst cooler 8B is mainly used to adjust the reaction temperature of the gasoline riser, to keep it in the best value. Another catalyst cooler (not shown) is primarily used for regulating the temperature of the regenerator to keep it in the best value.

35A, 35B are fluidized media, such as air, steam, etc., 36A , 36B are lifting media, such as air, steam, etc. 37A , 37B are taking-heat medium, including water, steam, air, and all kinds of oil.

According to requirements of the process, these three catalyst coolers in any one or two can not be set.

When the catalyst coolers for adjusting the temperature of the regenerator is not set, the temperature of regenerator is controlled by adjusting the catalyst cooler 8A, and / or the flow rate of streaming media 35A, 35B (including air, steam, etc.) of catalyst cooler 8B and / or the content of the catalyst returned to the regenerator and / or controlled by the thermal equilibrium of the reaction and regeneration system.

In order to easily control the temperature of the second reaction zone 2 of the riser reactor, the cold-shocking agent 34 can be injected into the downstream of the first reaction zone to conveniently control the temperature of the second reaction zone. The above-mentioned cold-shocking agent can be any one of gas or liquid (including water, or any kinds of oil, etc.) and cold catalysts, or two or more of them. The cold catalyst is the one of the cold regenerated catalyst, the spent catalyst, or the cold semi-regenerated catalyst, or two or more of them. As the cold-shocking agent, the cold regenerated catalyst can enter the auxiliary riser through the pipeline of the cold regenerated catalyst, and reach the second reaction zone of the riser reactor as the cold shock agent by the lifting medium (not drawn).

The regenerator 5 is connected with the catalyst cooler 8A through regenerator duct 10A and the regenerated catalyst after cooling enters into the mixing buffer space 9A in the lower part. The cold regenerated catalyst is connected with the pre-lift sect 4 of the riser reactor through the cold pipeline 11A. Leaving the catalyst cooler 8A, the temperature of the cold regenerated catalyst can be controlled by regulating the flow rate of the fluidized media 35A (including air, steam, etc.) and / or the flow rate of the lifting media 36A (including air, steam, etc.) of the return pipe 12A of the cold regenerated catalyst. The control valve 21A is set as one of control components in order to facilitate the control of the flow rate of the cold regenerated catalyst.

For conveniently controlling the temperature of the first reaction zone of the riser reactor of heavy oil, the pipeline of the hot regenerated catalyst (including the control valve) can connect directly with the pre-lift sect 4 of the heavy oil riser reactor. After lifting the cold regenerated catalyst mixed with hot regenerated catalyst in the pre-lift sect 4 of the riser reactor by the mixed media 32 of pre-lift area (including water, steam, and refinery gas, etc.), the temperature can reach to equilibrium. Of course, There are also many other control equipments and control methods, which do not limit any specific implementations of the present invention.

The regenerator 5 is connected with the catalyst cooler 8B through regenerator duct 10B and the regenerated catalyst after cooling enters into the mixing buffer space 9B in the lower part. The cold regenerated catalyst is connected with the pre-lift sect of the riser reactor of gasoline through the cold pipeline 11B. Leaving the catalyst cooler 8B, the temperature of the cold regenerated catalyst can be controlled by regulating the flow rate of the fluidized media 35B (including air, steam, etc.) and / or the flow rate of the lifting media 36B (including air, steam, etc.) of the return pipe 12B of the cold regenerated catalyst. The control valve 2 1 B is set as one of control components in order to facilitate the control of the flow rate of the cold regenerated catalyst.

To easily control the temperature of the riser reactor of gasoline, the pipeline 19B of the hot regenerated catalyst (including control valve 22B) is set connected with gasoline pre-lift zone 4. The cold regenerated catalyst with hot regenerated catalyst in pre-lift area 4 of gasoline riser reactor can be lifted and mixed by pre-lift medium 30 (including water, steam, and refinery gas and other) and then the temperature reaches equilibrium. Of course, There are also many other control equipments and control methods, which do not limit any specific implementations of the present invention.

The above-mentioned catalyst cooler can also be connected with the regenerator and the riser as a single entity, or connected through the pipelines.

Heavy oil as the raw materials 33 and the regenerated catalyst from the pre-lifting zone 4 of the riser reactor with heavy oil are mixed and then enter into the first reaction zone 3 of the riser reactor with heavy oil in FCC. The main operating conditions are as follows: reaction temperature 400-650 °C(preferably 520-600 °C), reaction pressure 0.11 ~ 0.4MPa, contact time 0.05 ~ 5 seconds (preferably 0.1-3 seconds), the ratio of catalysts and raw materials average of 3 to 15, preferably 5 to 12.

The cold-shocking agent 34, oil and gas from the first reaction zone 3, and the mixture of catalyst are mixed for cooling, and then enter into the second reaction zone 2 of the riser reactor with heavy oil, in which the secondary reactions such as hydrogen transfer, isomerization, aromatization occur for further reducing the olefin and sulfur content, and increasing octane. The main operating conditions are as follows: reaction temperature of 350-620°C (preferably 450-530 °C), reaction pressure 0.11 ~ 0.4MPa, 0.5 to 30 seconds of contact time (preferably 1-5 seconds).

Poor-quality gasoline 31 and the regenerated catalyst from the pre-lifting zone of the gasoline riser are mixed, and then enter into gasoline riser reactor. Under the conditions of the reaction temperature of 300-650 ° C (preferably 400-560 °C), reaction pressure 0.11 ~ 0.4MPa, the contact time 0.5 to 30 seconds (preferably 1-15 seconds), the weight ratio of the catalyst and the raw materials the average of 1 to 50, preferably 2 to 20, mainly gasoline modification reactions, such as isomerization, aromatization happen to reduce the content of olefins and sulfur, and to improve the octane number.

The mixture of the oil and gas from the second reaction zone 2 and the catalyst enters the disengager 1 and can be separated. The oil and gas, or mixed with the oil and gas from the disengager 18 enter the system of fractionation and absorption for fractionation and liquefied petroleum gas (LPG) recovery, to obtain catalytic cracking gasoline products and unconverted oil. The spent catalyst stripped by the stripper 1A of the disengager 1 enters into the regenerator 5 through the pipeline 7 of the spent catalyst and control valve (not drawn).

The reactants from the gasoline riser 6 enter the disengager 18 and can be separated as the gas and oil or the catalyst. The oil and gas, enter the system of fractionation and absorption for fractionation and LPG recovery, to obtain catalytic cracking gasoline products; Or mixed with the oil and gas from the disengager 18 enter the system of fractionation and absorption for fractionation and liquefied petroleum gas (LPG) recovery.

The spent catalyst can be stripped by stripping section18A, and then enters into the regenerator 5 by the pipeline 15 of the spent catalyst and the control valve 23.

After entering the regenerator 5, the spent catalyst from the stripping sections of the two disengagers is burnt regenerated in the presence of oxygen-containing gas 38 (including air, etc.), then enters into the catalyst cooler 8A and catalyst cooling device 8B by two routes. The cold-regenerated catalyst of these two routes with /or not mixed with hot-regenerated catalyst for cycling use.

The gas or liquid injection point of the cold-shocking agent is set at the upstream or downstream of the injection point in the cold catalyst to easily control the temperature of the reaction zone, or form another reaction zone.

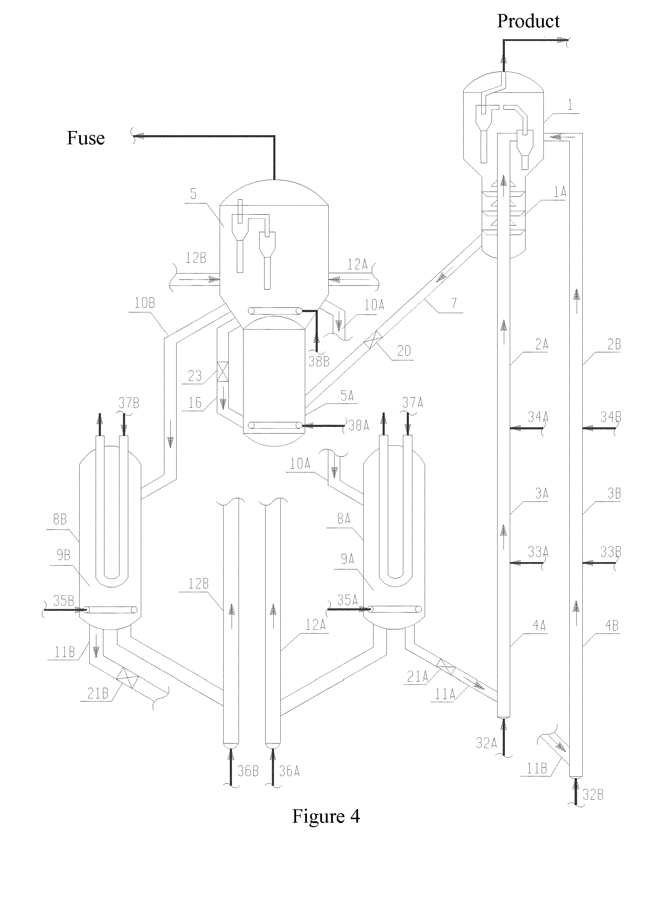

Figure 4 is a typical Scheme of the heavy oil catalytic converter device (shared disengager) for the application of the present invention.

Such as shown in Figure 4: the method and its equipment of the present invention for the heavy oil catalytic conversion, include the disengager 1 , two heavy oil riser reactor shared one disengager, (which can include the pre-lift sect 4A, 4B, the first reaction zone 3A, 3B, the second reaction zone 2A, 2B), the regenerator 5, the combustor 5A. The part between the combustor 5 and the stripper 1A of the disengager 1 set the pipeline 7 of the spent catalyst and control valve 20 to connect the combustor 5a and the stripping section 1A for transporting the spent catalyst to the combustor 5A. To keep the start combusting temperature of the combustor 5, the recycling pipeline 16 of the spent catalyst and the control valve 23 are set.

The regenerator has three inside or outside taking-heat equipments as the catalyst coolers, including the entrance of the catalyst directly with the dense of the regenerator (or through a pipe), the mixing buffer space in the lower part, internal taking-heat element (including telescopic or tube-wire, etc.), the facilities for distribution of streaming media in the lower part.

Catalyst cooler 8A, 8B are mainly used to adjust the reaction temperature of the first reaction zone for two heavy oil riser reactors , to keep it in the best value. Another catalyst cooler (not shown) is primarily used for regulating the temperature of the regenerator to keep it in the best value.

35A, 35B are fluidized media, such as air, steam, etc., 36A , 36B are lifting media, such as air, steam, etc. 37A , 37B are taking-heat medium, including water, steam, air, and all kinds of oil.

According to requirements of the process, any one or two in these three catalyst coolers can not be set.

The regenerator 5 is connected with the catalyst cooler 8A through regenerator duct 10A and the regenerated catalyst after cooling enters into the mixing buffer space 9A in the lower part. The cold regenerated catalyst is connected with the pre-lift sect 4A of the riser reactor through the cold pipeline 11A. Leaving the catalyst cooler 8A, the temperature of the cold regenerated catalyst can be controlled by regulating the flow rate of the fluidized media 35A (including air, steam, etc.) and / or the flow rate of the lifting media 36A (including air, steam, etc.) of the return pipe 12A of the cold regenerated catalyst. The control valve 21A is set as one of control components in order to facilitate the control of the flow rate of the cold regenerated catalyst.

The regenerator 5 is connected with the catalyst cooler 8B through regenerator duct 10B and the regenerated catalyst after cooling enters into the mixing buffer space 9B in the lower part. The cold regenerated catalyst is connected with the pre-lift sect 4B of the riser reactor through the cold pipeline 11B. Leaving the catalyst cooler 8A, the temperature of the cold regenerated catalyst can be controlled by regulating the flow rate of the fluidized media 35B (including air, steam, etc.) and / or the flow rate of the lifting media 36B (including air, steam, etc.) of the return pipe 12B of the cold regenerated catalyst. The control valve 2 1 B is set as one of control components in order to facilitate the control of the flow rate of the cold regenerated catalyst.

Of course, There are also many other control equipments and control methods, which do not limit any specific implementations of the present invention.

For conveniently controlling the temperature of the first reaction zone of the riser reactor of heavy oil, the pipeline of the hot regenerated catalyst (including the control valve) (not drawn) can connect directly with the pre-lift sect 4A, 4B of the heavy oil riser reactor. After lifting the cold regenerated catalyst mixed with hot regenerated catalyst in the pre-lift sect 4A, 4B of the riser reactor by the mixed media 32A, 32B of pre-lift area (including water, steam, and refinery gas, etc.), and the temperature can reach to equilibrium. Of course, There are also many other control equipments and control methods, which do not limit any specific implementations of the present invention.

In order to easily control the temperature of the second reaction zone 2 of the riser reactor, the cold-shocking agent 34A, 34 B can be injected into the downstream of the first reaction zone to conveniently control the temperature of the second reaction zone. The above-mentioned cold-shocking agent can be any one of gas or liquid (including water, or any kinds of oil, etc.) and cold catalysts, or two or more of them. The cold catalyst is the one of the cold regenerated catalyst, the spent catalyst, or the cold semi-regenerated catalyst, or two or more of them. As the cold-shocking agent, the cold regenerated catalyst can enter the auxiliary riser through the pipeline of the cold regenerated catalyst, and reach the second reaction zone of the riser reactor as the cold shock agent by the lifting medium (not drawn).

The above-mentioned catalyst cooler can also be connected with the regenerator and the riser as a single entity, or connected through the pipelines.

Heavy oil (as the raw materials) 33A and the regenerated catalyst from the pre-lifting zone 4A of the riser reactor with heavy oil are mixed and then enter into the first reaction zone 3A of the riser reactor with heavy oil in FCC. The main operating conditions are as follows: reaction temperature 400-650 °C(preferably 520-600 °C), reaction pressure 0.11 - 0.4MPa, contact time 0.05 - 5 seconds (preferably 0.1-3 seconds), the ratio of catalysts and raw materials average of 3 to 15, preferably 5 to 12.

The cold-shocking agent 34A, oil and gas from the first reaction zone 3A, and the mixture of catalyst are mixed for cooling, and then enter into the second reaction zone 2A of the riser reactor with heavy oil, in which the secondary reactions such as hydrogen transfer, isomerization, aromatization occur for further reducing the olefin and sulfur content, and increasing octane. The main operating conditions are as follows: reaction temperature of 350-620°C (preferably 450-530 °C), reaction pressure 0.11 ∼ 0.4MPa, 0.5 to 30 seconds of contact time (preferably 1-5 seconds).

The mixture of the reactive oil and gas form the second reaction zone 2A and the catalyst enter into the shared disengager 1 for separation.

Heavy oil as raw materials (back to the refinery, slurry, etc.) 33B and the regenerated catalyst from the pre-lifting zone 4B of the riser reactor with heavy oil are mixed and then enter into the first reaction zone 3B of the riser reactor with heavy oil in FCC. The main operating conditions are as follows: reaction temperature 400-650 °C(preferably 520-600 °C), reaction pressure 0.11 ∼ 0.4MPa, contact time 0.05 - 5 seconds (preferably 0.1-3 seconds), the ratio of catalysts and raw materials average of 3 to 15, preferably 5 to 12. The cold-shocking agent 34B, oil and gas from the first reaction zone 3B, and the mixture of catalyst are mixed for cooling, and then enter into the second reaction zone 2B of the riser reactor with heavy oil, in which the secondary reactions such as hydrogen transfer, isomerization, aromatization occur for further reducing the olefin and sulfur content, and increasing octane. The main operating conditions are as follows: reaction temperature of 350-620°C (preferably 450-530 °C), reaction pressure 0.11 ∼ 0.4MPa, 0.5 to 30 seconds of contact time (preferably 1-5 seconds).

The mixture of the reactive oil and gas form the second reaction zone 2B and the catalyst enter into the shared disengager 1 for separation (the separation device not drawn).

The mixture of the oil and gas from two heavy oil riser reactors and the catalyst can be further separated, then entered into the system of fractionation and absorption for fractionation and liquefied petroleum gas (LPG) recovery.

The spent catalysts from two heavy oil riser reactors are mixed and then enter into the stripper 1A of the disengager 1. After stripping, the mixtures enter into the combustor 5A through the pipeline 7 of the spent catalyst and control valve 20. In the presence of the main wind 38A (oxygen-containing gases including air, etc.), the spent catalyst was fast burnt and transports to the regenerator 5 for further burning. The secondary air 38B (oxygen-containing gas, including air) is supplied on the bottom of the regenerator 5. The regenerated catalyst from the regenerator 5 bottom enters the catalyst cooler 8A , catalyst cooler 8B and another catalyst cooler (not draw) by three routes. One is that the cold regenerated catalyst mixed or not with hot regenerated catalyst for recycling use, the other way is back to the regenerator.

The gas or liquid injection point of the cold-shocking agent is set at the upstream or downstream of the injection point in the cold catalyst to easily control the temperature of the reaction zone, or form another reaction zone.

### Embodiment 1:

To confirm the effect of the present invention, the process shown in Figure 2, the raw materials shown in Table 1, Table 2 shows the process conditions and the GOR catalyst from Changling refinery catalyst plants. The experimental results are shown in Table 3.

**Table 1**

| Flow atmospheric residue | |
|---|---|
| density, 20/4°C | 0.928 |
| Carbon residue | 7.8%(Wt) |
| Sulfur content | 0.8%(Wt) |
| Nitrogen content | 1800PPm |

In Table 2, the plan A in the art is conventional FCC process technology: the temperature of regenerator catalyst bed 680 °C, the reaction temperature 525 °C, the raw material temperature 200° C, the catalyst/ oil ratio 6.7. Therefore, the temperature difference of the regenerated catalyst and raw materials is 480 °C. The plan A in the art has the following deficiencies:
(1) raw material temperature of 200 ° C to crack residue-containing raw materials is quite low.
(2) Although the temperature of the regenerator can meet the renewable requirements, but the temperature is too high when contacting with the raw material, prone to thermal cracking.

It should be understood that Table 2 of the embodiment is not limited. Unlike existing technologies, the plan B of the present invention, any combination of the catalyst circulation rate can be determined between the two risers in order to ensure that the catalyst/ oil ratio required by the reaction instead of forcibly determined by the device thermal equilibrium.

**Table 2**

| Parameter | Plan A in the art | Plan B in the present invention |
|---|---|---|
| Temperature of riser reactor,°C | 525 | - |
| Temperature of the first reaction zone °C | - | 525 |
| Temperature of the second reaction zone, °C | - | 505 |
| Feed temperature, °C | 200 | 350 |
| Regeneration temperature, °C | 680 | 700 |
| Temperature of the regenerated catalyst in the entrance of riser, °C | 680 | 630 |
| Temperature difference of catalyst feed, °C | 450 | 287 |
| Catalyst/oil ratio, weight/weight | 6.7 | 8.6 |

**Table 3**

| Product | Plan A in the art | Plan B in the present invention |
|---|---|---|
| H2S **%** | 0.6 | 0.7 |
| Fuel gas **%** | 5.5 | 4.2 |
| LPG **%** | 14.5 | 14.8 |
| Gasoline **%** | 38.9 | 41.9 |
| Light cycle oil **%** | 26.2 | 25.5 |
| Decant oil **%** | 5.0 | 5.0 |
| Carbon **%** | 9.3 | 7.9 |
| Total | 100.0 | 100.0 |

| Gaso line | | |
|---|---|---|
| Olefin content **%** | 45.6 | 27.6 |
| Aromatic content **%** | 14.9 | 18.9 |
| Sulfur content PPm | 696 | 486 |
| Octane number | 89.7 | 90.6 |

The results in Table 3showed that production rate of coke and dry gas decreased by 2.7%, olefin content in gasoline is reduced by 39%, 30% reduction in sulfur content, octane number (RON), increased by 0.9 units.

## Claims

1. A cycling method and its equipment of cold regenerated catalyst, **characterized in that**, including a FCC process: hydrocarbon materials react with catalyst in the riser reactor(with or without a fluidized bed reactor); the materials enter into a settler for the separation of catalyst from gas and oil; Separated catalyst will be stripped and enter into regenerator to burn for regeneration; The regenerated catalyst will be cold or/and not be cold to return the riser reactor directly for cycling use; The details are as follows:
1) the regenerator includes one, two, or more catalyst coolers, each connected to the riser reactor (or the fluidized bed reactor) is used to adjust the reaction temperature of the reaction zone, or/and to adjust regenerator temperatures, so as to keep them in the best value; the catalyst coolers connected with the riser reactor (or the fluidized set in the inside or outside of regenerator, or set under its riser reactor ;
2) The catalyst entrance of the shell of the described catalyst cooler directly (or through a pipeline) connects with the regenerator dense phase; there are internal components in the cooler for removing heat; there are fluidized media distribution facilities under the cooler; In the downstream, there is a buffer space for mixed buffer catalyst; the upper part is installed or not installed the gas channel to return to diluting phase of the regenerator;
3) There are one, two or more catalyst exits set in the catalyst mixed buffer space in the downstream of the described catalyst cooler; One, two or more exits of catalysts are connected to the transmission channel of cold catalyst used to deliver cold-regenerated catalyst circulation to one, two or more of the riser (reactor or auxiliary riser); Another one, two or more (or not) catalyst exists are connected to the transmission channel of cold catalyst for conveying cold regenerated catalyst return to the regenerator; The described transmission channel of cold catalyst to the riser is set in the outside of the described catalyst cooler's shell, or all (or partly) set in the inside of the described catalyst cooler's shell; The return channel of the cooled catalyst back to the regenerator all set in the outside of the described catalyst cooler's shell, or all (or partly) set in the inside of the described catalyst cooler's shell.
4) The described riser reactor is set one, two or more reaction zones with or without fluidized bed reactor; Before cold regenerated catalyst enters into the riser reactor or fluidized bed reactor, the riser reactor is set (or not set) a pre-lift section, with pre-lift media to send the cold regenerated catalyst to the riser reactor or the fluidized bed reactor; The described pre-lift section can all be set outside of the catalyst cooler shell, or all (or part) set inside.
5) Part of regenerated catalysts coming from regenerator are cooled by catalyst cooler within 200 to 720°C and enter into the pre-lift or directly into each reaction zone of riser reactor; Or these regenerated catalysts mix or/and with hot regenerated catalyst without cooling to get the regenerated catalyst mixture which temperature is lower than regenerator temperature and then the mixture enter into pre-lift or/and each reaction zone of the riser reactor; Or the cold and the hot regenerated catalysts enter into the pre-lift of riser separately and directly with pre-lift media for increasing the catalysts temperature to reach a proper temperature and then the mixture enter into each reaction zone of riser reactor; Or the regenerated catalyst without cooling by catalyst cooler enter into the pre-lift zone or/and each reaction zone of the riser reactor directly for cycling.

2. The method and its equipment of claim 1, wherein Setting (or not setting) one, two or more assistant risers, the described cold regenerated catalyst through the assistant risers with the pre-lift media are lifted to one, two or more riser reactors or fluidized bed reactor reaction zones as a cold shock agent for cycling.

3. The method and its equipment of one of claim 1 and 2, wherein the regenerated catalysts coming from regenerator as step (5) described are cooled by the catalyst cooler within 360 to 650 °C.

4. The method and its equipment of one of claim 1, wherein the temperature of the described cold regenerated catalyst can be controlled by adjusting the flows of the fluidized media and/or taking-heat media or adjusting other parameters; or controlled by adjusting the flows of the fluidized media and/or taking-heat media and/or adjusting the flows of cool catalyst returning regenerator or other parameters.

5. The method and its equipment of one of claim 1, wherein the temperature of the described regenerated catalysts mixture can be controlled by adjusting the ratio of cold and hot regenerated catalyst.

6. The method and its equipment of one of claim 1, wherein the reaction temperature of the described riser reactor or fluidized bed reactor reaction zones can be controlled by adjusting the ratio of the catalyst and feed, or/and by adjusting the temperature of the described cold regenerated catalyst or the temperature of the described regenerated catalyst mixture, or/and by using multi-point feeding technology, and /or by adding various cold shock agents to the riser reactor.

7. The method and its equipment of one of claim 1, wherein the described taking-heat medias in the catalyst cooler include water, steam, air and various oils.

8. The method and its equipment of one of claim 1, wherein the described cycling method and its equipment of the cold regenerated catalyst can be used widely for various FCC including tar catalytic cracking, wax oil catalytic cracking, gasoline catalytic modification for improving quality, or light hydrocarbon catalytic conversion, or for other burning process of gas-solid fluidized reaction including residue pre-processing, ethylene made by methanol, fluidize coking or flexible coking.

9. The method and its equipment of one of claim 1, wherein the cycling method and its equipment of cold regenerated catalyst can be implemented independently for each reaction zone of a riser reactor (or fluidized bed reactor) of all kinds of FCC; or jointed to implement for each reaction zone of one, two or more riser reactors (or fluidized bed reactor) including tar risers and gasoline risers of the dual risers FCC units or different feeds riser reactors.

10. The method and its equipment of one of claim 1, wherein the described catalyst in the catalyst cooler is the regenerated catalyst with any carbon content or the regenerated catalyst without completed regeneration or the contact agents with any carbon content or coking particles.
